(19) Europäisches Patentamt
European Patent Office
Office européen des brevets

(11) **EP 4 039 572 B1**

(12) **EUROPEAN PATENT SPECIFICATION**

(45) Date of publication and mention
of the grant of the patent:
**03.04.2024 Bulletin 2024/14**

(21) Application number: **21155925.7**

(22) Date of filing: **09.02.2021**

(51) International Patent Classification (IPC):
**B62M 6/55** *(2010.01)* **B62M 6/45** *(2010.01)*
**B62M 11/14** *(2006.01)* **B62M 11/18** *(2006.01)*
**F16H 37/04** *(2006.01)* F16H 1/32 *(2006.01)*
F16H 3/72 *(2006.01)*

(52) Cooperative Patent Classification (CPC):
**B62M 6/55; B62M 6/45; B62M 11/145;**
**B62M 11/18; F16H 37/04;** F16H 1/32; F16H 3/724

(54) **DRIVE TRAIN ASSEMBLY FOR A BICYCLE AND BICYCLE**

ANTRIEBSSTRANGANORDNUNG FÜR EIN FAHRRAD UND FAHRRAD

ENSEMBLE DE TRAIN D'ENTRAÎNEMENT POUR UNE BICYCLETTE ET BICYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2022 Bulletin 2022/32**

(73) Proprietor: **Podkriznik d.o.o.
3333 Ljubno ob Savinji (SI)**

(72) Inventors:
• **Erjavec, Miha
3312 Prebold (SI)**
• **Bregar, Matej
1230 Domzale (SI)**
• **Kulovec, Simon
1000 Ljubljana (SI)**

(74) Representative: **Schaumburg und Partner
Patentanwälte mbB
Mauerkircherstraße 31
81679 München (DE)**

(56) References cited:
**EP-A1- 3 406 511          DE-A1-102017 219 601
GB-A- 2 357 329          KR-A- 20160 041 733
US-A1- 2011 180 341**

EP 4 039 572 B1

**Description**

The present invention relates to a drive train assembly for a bicycle having an electric motor. The invention further relates to a bicycle.

Bicycles with an electric motor, also called e-bikes, are an important part in the field of e-mobility or more specifically micro e-mobility. They typically comprise two sources of driving power, the first source being the user riding the bicycle. The user's muscle power is translated into a rotational movement by a set of pedals arranged on a shaft. The rotational movement is then transmitted to a wheel of the bicycle, e.g. by a set of sprockets connected by a chain. The second source of power is a battery or similar source of electric energy. This electric energy is translated into a rotational movement by the electric motor which directly or indirectly drives the output shaft. The parts of the bicycle generating, translating and transmitting the driving power form a bicycle drive train assembly.

Document US 10343746 B2 discloses a bicycle with an electric motor that is connected to the shaft driving the sprocket by a gearbox. The gearbox is a so called harmonic drive, which uses an elliptical input shaft to generate a movement of a flexible ring, which generates a rotary movement of an output shaft by way of an outer ring.

Document US 2017/0259883 A1 discloses another bicycle with an electric motor.

The drive train described therein comprises a planetary gear train, in which a shaft connected to the pedals is directly connected to stage planet gears. The planet gears rotate by means of the electric motor's rotor gear. The rotating and revolving planet gears turn the drive's output shaft which is connected to the sprocket.

Document EP 2 625 441 B1 discloses a bicycle with an electric motor that is connected to the shaft driving the sprocket by a so called harmonic pin drive. The harmonic pin drive uses a flexible output shaft or eccentric rings with pins instead of gears in order to generate a circular motion.

Document DE 20 2008 002 610 U1 discloses an auxiliary drive for a bicycle comprising an electric motor. The rotational movement generated by the electric motor is transmitted to the pedal shaft by way of a one-stage gear transmission.

Document EP 2 723 630 B1 discloses another auxiliary drive for a bicycle comprising an electric motor. The auxiliary drive described in this document comprises a multi stage gear transmission.

Reference is also made to Document EP 3 163 122 A1 which describes various applications of a pin ring in harmonic drive.

Documents US 2011/180341 A1, KR 2016 0041733 A, and EP 3 406 511 A1 disclose drive trains for electric bicycles comprising a planetary gear. Document DE 10 2017 219 601 A1 discloses a drive train for a pedelec utilizing a harmonic drive. Said US 2011/180341 A1 discloses a drive train assembly according to the preamble of claim 1.

In e-mobility weight savings greatly enhance the efficiency of the drive train. In particular, in the field of micro e-mobility saving space is almost as important.

It is therefore an object of the present invention to provide a compact and lightweight drive train assembly for a bicycle that has a high power density and to provide a bicycle having such a drive train assembly.

The afore-mentioned object is achieved by the subject-matter of the independent claim 1.

Advantageous embodiments are defined in the dependent claims and the following description.

According to the invention, there is provided a drive train assembly as set out in claim 1.

According to the invention, the ring gear is rotationally fixed, e.g. by being connected to a housing of the drive train. Alternatively, in a not claimed embodiment, the planet gear may be rotationally fixed to the housing. In this alternative embodiment the input shaft is connected to the housing and the ring gear is connected to the output shaft.

The input shaft may be driven directly or indirectly by the electric motor. The cage may be of open or closed design. The cage is connected to the planetary gears by so called piercing pins. If the piercing pins are supported on both sides of the planetary gears the cage is of a closed design (supported beam), otherwise the cage is of an open design (cantilever beam). Further, the cage and the output shaft may be integrally formed.

The drive train allows riding the bicycle with support from the electric motor. The pedals are directly or indirectly connected to the sprocket, which drives a wheel of the bicycle, e.g. by a chain and sprocket. Thus, the torque generated by the pedals is directly transmitted to the sprocket. The electric motor is connected to the sprocket via the planocentric gear train. The planocentric gear train, also called cycloidal gear train, acts as a speed reducer reducing the rotational speed of the input shaft, thereby increasing the torque generated by the electric motor before it is transmitted to the sprocket. The planocentric gear train is a compact high transmission ratio gearbox that enables the drive train to increase the torque generated by the electric motor using little volume and mass. Thereby, a high power density is achieved. Thus, by using a planocentric gear train, a compact and lightweight drive train assembly for a bicycle that has a high power density is provided. Preferably, the electric motor is an asynchronous squirrel cage motor, a brushless direct current motor (BLDC), a permanent magnet synchronous motor (PMSM), a direct current motor, or an axial-flux motor. The electric motor may also be a brushless direct alternating motor (BLAC), electronically commutated motor (EC motor), permanent magnet motor (PM motor), interior permanent-magnet synchronous motor (IPMSM), surface permanent magnet synchronous motor (SPMSM), squirrel-cage induction motor (SCIM), switched reluctance motor (SRM), synchronous reluctance motor (SyRM), variable-frequency drive (VFD), wound-rotor induction motor (WRIM), or wound-rotor synchronous motor (WRSM). In particular, the motor may be a single phase motor or a tri-phase motor. These electric motors are highly efficient, robust and can be manufactured to be compact. Thus, they are well suited for e-mobility applications such as the inventive drive train. Electric energy for the electrical motor and other components may be supplied by a battery, battery pack or by other sources of electric energy, e.g. fuel cells, super capacitors or photovoltaic panels, either directly or indirectly.

According to the invention, the drive train assembly comprises a first clutch connecting the output shaft to the sprocket. The first clutch enables the electric motor to be decoupled from the drive train. This allows the drive train to be switched between a purely pedal driven mode to a motor assisted mode and back. By decoupling the electric motor from the drive train, it can be prevented that the output shaft becomes driven, e.g. by the pedals. Driving the output shaft of the electric motor can damage the electric motor. By providing the first clutch such a damage is prevented. Further, decoupling removes unnecessary load in case the bicycle is driven by means of the pedals alone.

In a preferred embodiment the drive train assembly comprises a second clutch connecting the pedal shaft to the sprocket. The second clutch enables the pedals to be decoupled from the drive train. Decoupling the pedals from the drive train can prevent the pedals to become driven by the electric motor. If the pedals become driven, they might injure the user riding the bicycle. This can be prevented, by providing the second clutch. Further, free pedaling in backwards direction while driving is enabled.

In another preferred embodiment the second clutch is a passive single direction clutch. In particular, the second clutch may be a ratchet. A single direction clutch allows power to be transmitted from an input side to an output side, but disengages automatically if the output side becomes driven. Thereby, a safe way of preventing injury to the user riding the bicycle and/or damage to the electric motor is provided.

According to the invention, the first clutch is an actuator controlled clutch. In another preferred embodiment, the second clutch is an actuator controlled clutch. The actuator may be a mechanical, electrical or hydraulic actuator. In this way, the first clutch and optionally the second clutch is engaged or disengaged, e.g. based on a sensor input and/or by a user input. This allows better control over the performance of the drive train. The drive train also comprises a clutch control unit configured to control the actuators in order to engage and/or disengage the first clutch and optionally the second clutch

In another preferred embodiment the drive train assembly comprises a rotation sensor configured to determine a rotational speed and/or rotational direction of the pedal shaft, the input shaft, the output shaft, and/or the sprocket; and the clutch control unit is configured to engage and/or disengage the first clutch and/or the second clutch based on the input from the rotation sensor. This allows a fine control of the drive train based on a variety of measured parameters.

In a preferred embodiment the drive train comprises a motor control unit configured to control the electric motor. The motor control unit may comprise any number of simple control devices, e.g. an on/off switch, and/or more complex control devices, e.g. variable frequency controls (VFC). The motor control unit and the clutch control unit may be part of a single drive train control unit which itself may comprise any number of simple control devices and/or more complex control devices.

Simple control devices comprise e.g. hand controlled switches, or electrical elements by which an operating point or a condition is controlled. An example of such a simple control is a switch for operating a three-phase electric motor either in a star or in a delta operation.

Complex control devices comprise a highly sophisticated assembly of various controllers or electrical circuits used for controlling the operating point of the electric motor. Complex control devices control the operating point of the electric motor by changing or altering the voltage and/or frequency of the motor" s electrical supply. A complex control device may be implemented as a PID controller or similar control-logic loops and are capable of vector controlling the electric motor. Complex control devices are usually made up of semi-conductors, chips, and other electrical elements that are assembled in a way to operate with a frequency a few times higher than the electric motors supply frequency. The control logic of a complex control device may be connected with several sensors of the drive train in a closed or an open loop, providing plenty of information of an operation of the complete drive train, rather than just an information about the electric motor itself.

In another preferred embodiment the pedal shaft is connected to the sprocket via a gear stage. The gear stage may be a single, multiple or planetary gear stage. The second clutch may be arranged before, between, or after two gear stages. The gear stage may be configured to be a transmission allowing to control the rotational speed and amount of torque generated by the user via pedals. Alternatively, the pedal shaft is connected to the sprocket via a single or multiple belt drives or chain drives.

In another preferred embodiment the ring gear and the cage are arranged coaxially. In this embodiment, essential components of the planocentric gear train are arranged along a common axis. This requires less components than other configurations. Thereby, friction is reduced and power loss due to the gear train is minimized, which further increases the effectiveness of the gear train.

In another preferred embodiment the input shaft is arranged parallel to a main gear axis. In particular, the input shaft is arranged coaxially with respect to the ring gear and the cage. Arranging the input shaft parallel to a main gear axis further decreases power losses due to the gear train. If the input shaft is arranged coaxially, the gear train can also be made very compact.

In another preferred embodiment the drive train assembly comprises at least one crank gear, which is connected to the input shaft, and has an eccentric shaft, which is connected to the planet gear. If the input shaft rotates, the eccentric shaft moves around the main gear axis thereby causing the oscillatory rotation of the planetary gear. The crank gear may be connected directly or indirectly, e.g. via a gear stage, to the input shaft.

In another preferred embodiment the drive train assembly comprises two or more ring gears having an internal gearing, wherein each ring gear is engaged with at least one planet gear having an external gearing and being arranged eccentrically with respect to the ring gear. In particular, this allows the use of helical gears having opposing tooth directions or helixes both as ring gear and as planetary gear. This configuration has a very low transmission error, which ensures smooth running and reduces noise from the drive train. Further, having more than one ring gears allows the planocentric gear train to be configured as a multistage gear train achieving higher transmission ratios than a single stage gear train in a very compact unit. A higher transmission ratio further increases the torque output by the output shaft.

In another preferred embodiment the planet carrier comprises bearings. In this embodiment the planet gear is attached to the planet carrier by the bearings. This allows the planet gear to rotate with minimum resistance further increasing the efficiency of the gear train.

Preferably, the gear train is not self-locking. This prevents damage to the gear train when the output shaft becomes driven.

Preferably, the transmission ratio of the gear train has a value greater than or equal to 5 and less than or equal to 1200. This ratio ensure an optimal relation between the rotation speed of the electric motor, and thus, the input shaft, and the torque output by the output shaft.

The condition on the transmission ratio can be expressed in terms of the ratio r relating the number of teeth of the ring gear $Z_B$, i.e. the number of teeth of the internal gearing, and the number of teeth of the planet gear $Z_P$, i.e. the number of teeth of the external gearing:

$$Z_P = r \times Z_B$$

The transmission ratio i of the single stage gear train can be written as:

$$i = \frac{Z_P}{Z_B - Z_P}$$

Thus, the ratio r must be greater than or equal to 5/6. If the ratio r is equal to 1 no rotation of the cage occurs. Accordingly, the ratio r must also be less than 1:

$$\frac{5}{6} \leq r < 1$$

The closer the ratio r is to 1, the greater the transmission ratio i.

Another aspect of the invention relates to a bicycle having a drive train of the aforementioned kind.

Hereinafter, specific embodiments are described referring to the drawings, wherein:

Figure 1 is a schematic drawing of a drive train for a bicycle having an electric motor according to an embodiment.

Figure 2 is a schematic drawing of a drive train according to an embodiment comprising clutches.

Figure 3 is a schematic drawing of a drive train according to an embodiment comprising a gear train connecting pedals to a sprocket.

Figure 4 is a schematic drawing of a drive train according to another embodiment comprising a gear train connecting the pedals to the sprocket.

Figure 5 is a schematic drawing of a drive train according to another embodiment comprising a single clutch connecting the electric motor to the sprocket.

Figure 6 is a schematic drawing of a drive train according to another embodiment comprising a single clutch connecting the pedals to the sprocket.

Figure 7 is a schematic drawing of the bicycle having the electric motor.

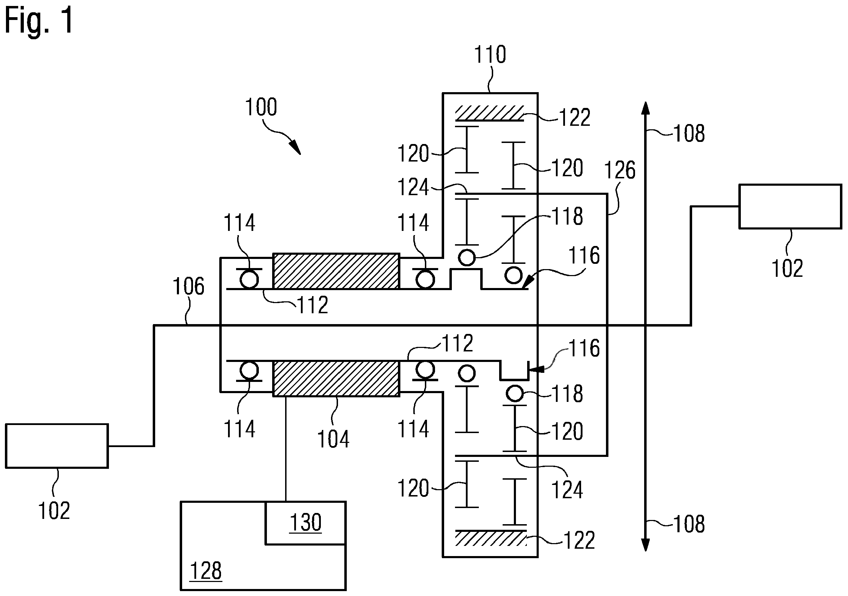

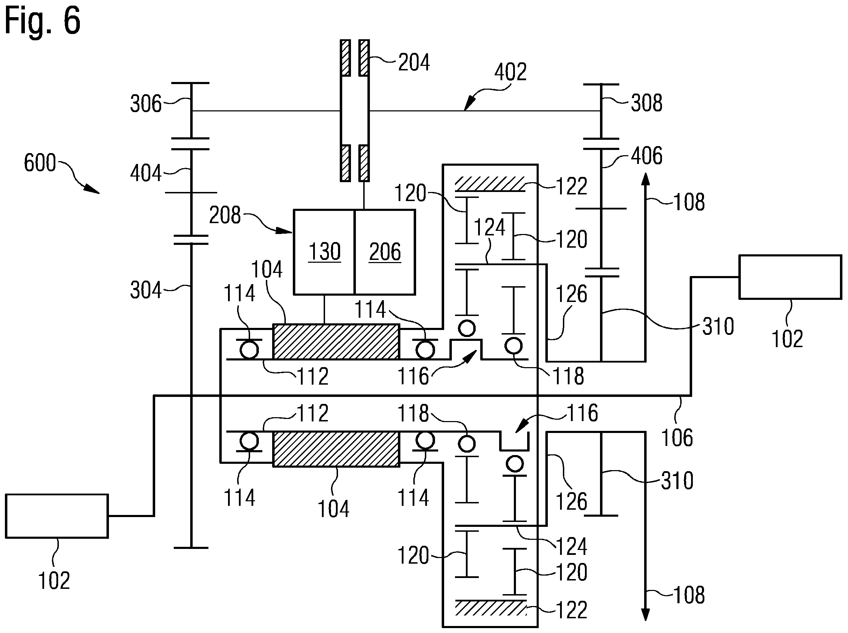

The Embodiments described with reference to Figures 1 and 6 are not encompassed by the wording of the claims but are considered as useful for understanding the invention.

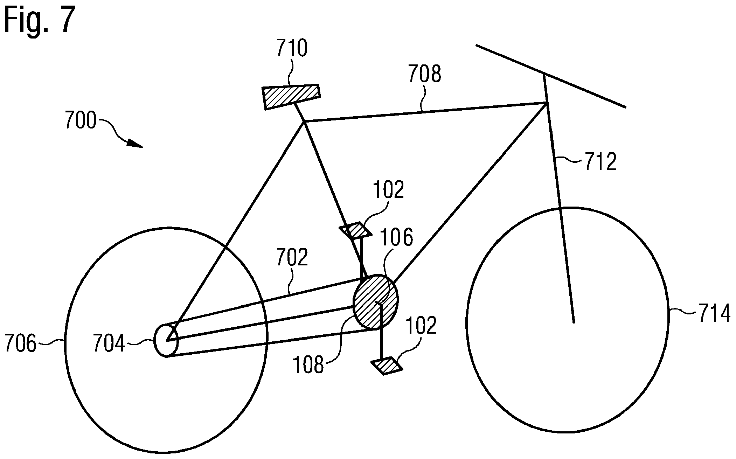

Figure 1 is a schematic drawing of a drive train 100 for a bicycle 700 (c.f. Figure 7) according to a not claimed embodiment.

The drive train 100 comprises a pair of pedals 102 for riding the bicycle 700 and an electric motor 104 for motor assisted riding.

The pedals 102 are arranged on left and right sides of the center of the drive train 100, respectively. The pedals 102 are fixed to a pedal shaft 106 and located eccentrically with respect to a rotation axis thereof. Thus, the pedals 102 and the pedal shaft 106 act as a crank shaft transforming muscle power of the user riding the bicycle 700 into a rotary motion of the pedal shaft 106. The pedal shaft 106 is directly connected to a sprocket 108. The sprocket 108 guides a chain 702 which drives a wheel sprocket 704 that is connected to a rear wheel 706 of the bicycle 700, as is shown in Figure 7. Thereby, the rotational movement of the pedal shaft 106 is transferred to the rear wheel 706 which moves the bicycle 700.

The electric motor 104 converts electric energy stored in a battery pack or similar source of electric energy into a rotary motion. The rotary motion generated by the electric motor 104 is transferred to the sprocket 108 via a planocentric gear train 110 that is arranged between the electric motor 104 and the sprocket 108 in the present embodiment.

The planocentric gear train 110 is a type of planetary gear train without a sun gear.

It comprises an input shaft 112 that is connected to the electric motor 104, mounted coaxially to the pedal shaft 106 and guided by bearings 114. The input shaft 112 is connected to a planet carrier 116. The planet carrier 116 has bearings 118 on which planet gears 120 are mounted. In the present embodiment there are two planet gears 120, but any other number of planet gears 120 is possible. The planet gears 120 are arranged eccentrically with respect to the pedal shaft 106 and have an external gearing, i.e. the teeth of gearing point radially outward. The planet carrier 116 and the planet gears 120 are located within a ring gear 122 that is rotationally fixed. The ring gear 122 has an internal gearing, i.e. the teeth of gearing point radially inward. The internal gearing is in mesh with the external gearing of the planet gears 120. The gear train 110 further comprises a cage 124 which is configured to transmit a rotational movement of the planet gears 120 to an output shaft 126.

The rotary motion generated by the electric motor 104 is transmitted by the input shaft 112 to the planet carrier 116. The rotary motion of the planet carrier 116 then causes a wobbling motion of the planet gears 120 inside the ring gear 122.

The wobbling motion of the planet gears 120 is such that a tooth of a single planet gear 120 describes a hypocycloid inside the pitch circle of the ring gear 122. At the same time the pitch circle of the planet gears 120 rolls on the inner pitch circle of the ring gear 122. This rolling causes a rotational movement of the planet gears 120 which has a slower rotational speed than and opposite direction of the rotational movement of the planet carrier 116 and thus the input shaft 112. The movement of the planet gears 120 is a wobbling superimposed with a rotational movement, i.e. an oscillatory rotation. This rotational movement of the planet gears 120 is transmitted to the output shaft 126 by the cage 124. The output shaft 126 then transmits its rotational movement to the sprocket 108. Since the rotational movement of the planet gears 120 has a slower rotational speed than the rotational movement of the planet carrier 116, the torque output by the output shaft 126 is greater than the torque generated by the electric motor 104. The actual speed reduction and thus the increase in torque is depended on the ratio of the number of teeth of the ring gear 122 to the number of teeth of the planet gears 120.

The drive train 100 further has a drive train control unit 128. The drive train control unit 128 comprises a motor control unit 130 that is connected to the electric motor 104 and configured to control the electric motor 104.

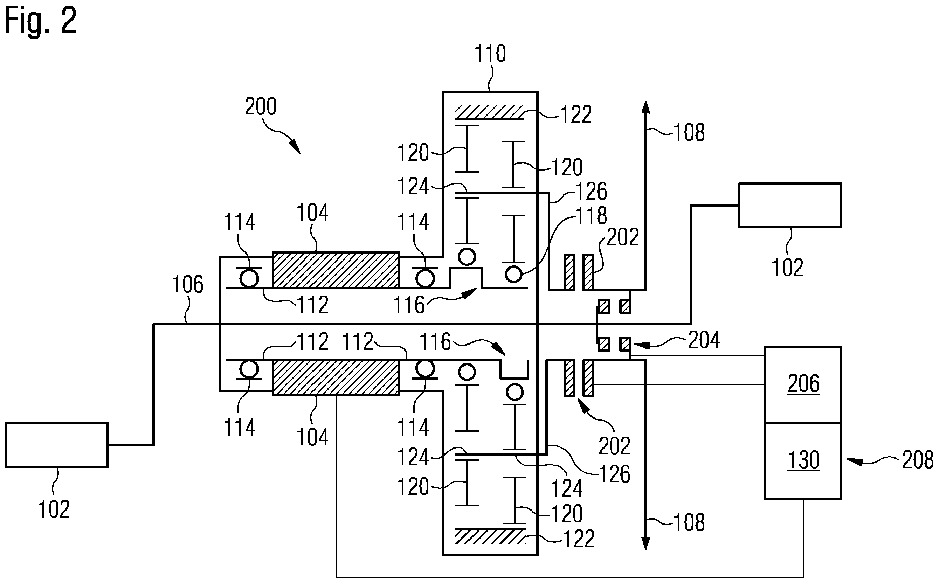

Figure 2 is a schematic drawing of a drive train 200 according to a claimed embodiment. The drive train 200 according to Figure 2 is distinguished from the drive 100 train according to Figure 1 in having two clutches 202, 204.

A first clutch 202 connects the output shaft 126 of the gear train to the sprocket 108. The first clutch 202 allows the electric motor 104 and the gear train 110 to be disengaged from the rest of the drive train 200. If the electric motor 104 is disengaged, the bicycle 700 is only powered via the pedals 102 by the user riding the bicycle 700. A second clutch 204 connects the pedal shaft 106 to the sprocket 108. The second clutch 204 allows the pedals 102 to be disengaged from the drive train 200. In this operating mode, the bicycle 700 is powered by the electric motor 104 alone.

Both clutches 202, 204 are arranged coaxially to the pedal shaft 106 and between the gear train 110 and the sprocket 108. In the present embodiment, both clutches 202, 204 are actuator controlled. The actuators are controlled by a clutch control unit 206 based on a user input or based on a sensor input. In particular, one or more rotation sensors may be used that monitor the rotational speed and/or rotational direction of the pedal shaft 106, the input shaft 112, output shaft 126 and/or the sprocket 108. The clutch control unit 206 and the motor control unit 130 are part of a drive train control unit 208.

Alternatively, the second clutch 204 may be a passive one directional clutch, allowing power to be transmitted to the sprocket 108 but not in the opposite direction. This prevents the pedal shaft 106 of the gear train 110 to become driven.

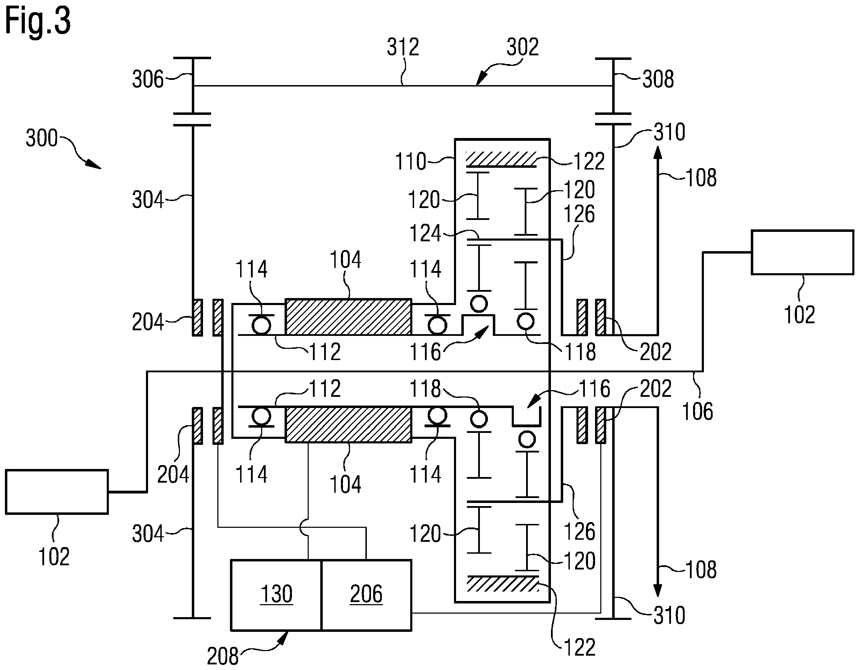

Figure 3 is a schematic drawing of a drive train 300 according to another claimed embodiment. The drive train 300 according to Figure 3 is distinguished from the drive train 200 according to Figure 2 in having a gear stage 302 connecting the pedal shaft 106 to the sprocket 108.

The gear stage 302 comprises four gears 304, 306, 308, 310. A first gear 304 is connected to the pedal shaft 106 by the second clutch 204. In this embodiment the second clutch 204 is arranged on the side of the electric motor 104 and the planocentric gear train 110 opposite of the sprocket 108. A second gear 306 is engaged with the first gear 304 and arranged on one end of a gear shaft 312 that runs in parallel to the pedal shaft 106. A third gear 308 is arranged on a second end of the gear shaft 312 and engaged with a fourth gear 310 that is directly connected to the sprocket 108. In the gear stage 302, the second and third gears 306, 308 are essentially a single idler gear. In this embodiment, the first and fourth gear 304, 310 have the same diameter and number of teeth. Thus, the gear stage 302 transmits the rotational movement of the pedal shaft 106 to the sprocket 108 with a transmission ratio of 1.

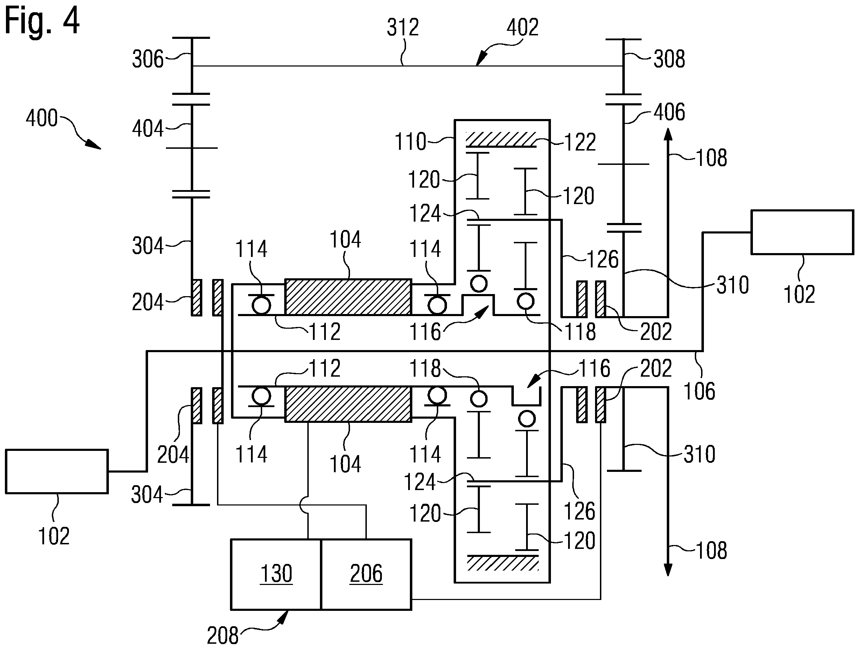

Figure 4 is a schematic drawing of a drive train according to another claimed embodiment.

The drive train according to Figure 4 is distinguished from the drive train according to Figure 3 in that the gear stage 402 comprises additional idler gears 404, 406.

A fifth gear 404 is arranged between and engaged with the first and second gears 304, 306. A sixth gear 406 is arranged between and engaged with the third and fourth gears 308, 310. In this embodiment, the sixth gear 406 has a larger diameter than the fifth gear 404. Consequently, the first gear 304 has a has a larger diameter than the fourth gear 310. Accordingly, in this embodiment the gear stage 402 transmits the rotational movement of the pedal shaft 106 to the sprocket 108 with a transmission ratio greater than 1. When the sprocket 108 is driven by the pedal shaft 106, the rotational speed of the sprocket 108 is less than the rotational speed of the pedal shaft 106.

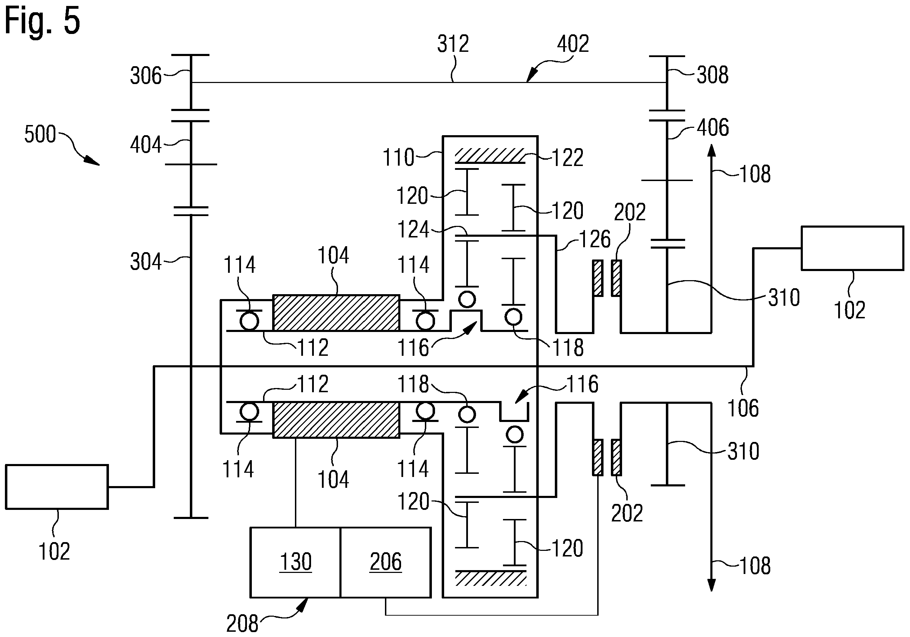

Figure 5 is a schematic drawing of a drive train 500 according to another claimed embodiment. The drive train 500 according to Figure 5 is distinguished from the drive train 400 according to Figure 4 in that the drive train comprises only a single clutch.

In this embodiment the drive train comprises only the first clutch 202 connecting the electric motor 104 to the sprocket 108. This allows the electric motor 104 to be detached from the drive train 500, thereby switching between a motor assisted driving mode and a non-assisted driving mode.

Figure 6 is a schematic drawing of a drive train 600 according to another not claimed embodiment. The drive train 600 according to Figure 6 is distinguished from the drive train 400 according to Figure 4 in that the drive train 600 comprises only a single clutch 204.

In this embodiment the drive train 600 comprises only the second clutch 204 connecting the pedal shaft 106 to the sprocket 108. The second clutch 204 is arranged between the second and third gears 306, 308 of the gear stage 402. Alternatively, the second clutch 204 may be arranged as in the embodiment shown in Figure 4. The second clutch 204 allows the pedals 102 to be detached from the drive train 600, thereby switching between a motor assisted driving mode and purely motor driven mode.

Figure 7 is a schematic drawing of the bicycle 700 comprising the drive train 100, 200, 300, 400, 500, 600 according to one of the embodiments shown in Figures 1 to 6. Figure 7 only shows the pedals 102, pedal shaft 106 and the sprocket 108 of the respective drive train 100 - 600.

The bicycle 700 comprises a frame 708 that mounts a saddle 710 for the user, a handlebar 712 holding a front wheel 714, the drive train 100 - 600 and a rear wheel 706. The rear wheel 706 comprises the wheel sprocket 704 that is connected to the sprocket 108 of the drive train 100 - 600 by the chain 702.

List of Reference Signs

| | |
|---|---|
| 100 | Drive train assembly |
| 102 | Pedal |
| 104 | Electric motor |
| 106 | Shaft |
| 108 | Sprocket |
| 110 | Gear train |
| 112 | Shaft |
| 114 | Bearing |

| 116 | Planet carrier |
| 118 | Bearing |
| 120 | Planet gear |
| 122 | Ring gear |
| 124 | Cage |
| 126 | Shaft |
| 128, 130 | Control unit |
| 200 | Drive train assembly |
| 202,204 | Clutch |
| 206, 208 | Control unit |
| 300 | Drive train assembly |
| 302 | Gear stage |
| 304, 306, 308, 310 | Gear |
| 400 | Drive train assembly |
| 402 | Gear stage |
| 404,406 | Gear |
| 500 | Drive train assembly |
| 600 | Drive train assembly |
| 700 | Bicycle |
| 702 | Chain |
| 704 | Wheel sprocket |
| 706 | Wheel |
| 708 | Frame |
| 710 | Saddle |
| 712 | Handle bar |
| 714 | Wheel |

**Claims**

1. Drive train assembly (200, 300, 400, 500) for a bicycle (700), comprising:

   a sprocket (108);
   a pedal shaft (106) connecting pedals (102) to the sprocket (108);
   an electric motor (104);
   a planocentric gear train (110) having

   a rotationally fixed ring gear (122) with an internal gearing,
   at least one planet gear (120) with an external gearing, the planet gear (120) being engaged with the ring gear (122) and arranged eccentrically with respect to the ring gear (122),
   at least one input shaft (112) driven by the electric motor (104), the input shaft (112) having a planet carrier (116) being formed such that a rotation of the input shaft (112) causes an oscillatory rotation of the planet gear (120), and
   a cage (124) being engaged with the planet gear (120) such that the oscillatory rotation of the planet gear (120) causes a rotation of the cage (124);

   an output shaft (126) connecting the cage (124) to the sprocket (108); and
   a first clutch (202) connecting the output shaft (126) to the sprocket (108),
   **characterized in that**
   the first clutch (202) is an actuator controlled clutch, and **in that** the drive train assembly (200, 300, 400, 500) comprises a clutch control unit (206) configured to control the actuator of the first clutch (202) to engage and/or disengage the first clutch (202).

2. The drive train assembly (200, 300, 400) according to claim 1, comprising a second clutch (204) connecting the pedal shaft (106) to the sprocket (108).

3. The drive train assembly (200, 300, 400) according to claim 2, wherein the second clutch (204) is a passive single direction clutch.

4. The drive train assembly (200, 300, 400) according to claim 2, wherein the second clutch (204) is an actuator controlled clutch.

5. The drive train assembly (200, 300, 400, 500) according to claim 4, comprising a rotation sensor configured to determine a rotational speed and/or a rotational direction of the pedal shaft (106), the input shaft (112), the output shaft (126), and/or the sprocket (108), wherein the clutch control unit is configured to engage and/or disengage the first clutch (202) and/or the second clutch (204) based on the input from the rotation sensor.

6. The drive train assembly (200, 300, 400, 500) according to any one of the claims 1 to 3, comprising a rotation sensor configured to determine a rotational speed and/or a rotational direction of the pedal shaft (106), the input shaft (112), the output shaft (126), and/or the sprocket (108), wherein the clutch control unit is configured to engage and/or disengage the first clutch (202) based on the input from the rotation sensor.

7. The drive train assembly (200, 300, 400, 500) according to any of the preceding claims, comprising a motor control unit (130) configured to control the electric motor (104).

8. The drive train assembly (300, 400, 500) according to any of the preceding claims, wherein the pedal shaft (106) is connected to the sprocket (108) via a gear stage (302, 402).

9. The drive train assembly (200, 300, 400, 500) according to any of the preceding claims, wherein the ring gear (122) and the cage (124) are arranged coaxially.

10. The drive train assembly (200, 300, 400, 500) according to claim9, wherein the input shaft (112) is arranged coaxially with respect to the ring gear (122) and the cage (124).

11. The drive train assembly (200, 300, 400, 500) according to any of the preceding claims, comprising at least one crank gear, which is connected to the input shaft (112), and has an eccentric shaft, which is connected to the planet gear (120).

12. The drive train assembly (200, 300, 400, 500) according to any of the preceding claims, comprising two or more said ring gears (122) having said internal gearing, wherein each ring gear (122) is engaged with at least one said planet gear (120) having said external gearing and being arranged eccentrically with respect to said ring gear (122).

13. The drive train assembly (200, 300, 400, 500) according to any of the preceding claims, wherein the gear train is not self-locking.

14. The drive train assembly (200, 300, 400, 500) according to any of the preceding claims, wherein the transmission ratio of the gear train has a value equal to 5, or greater than 5 and less than 1200, or equal to 1200.

15. A bicycle (700) having a drive train assembly (200, 300, 400, 500) according to any of the preceding claims.


**Patentansprüche**

1. Antriebsstranganordnung (200, 300, 400, 500) für ein Fahrrad (700), umfassend:

ein Kettenrad (108);
eine Pedalwelle (106), die Pedale (102) mit dem Kettenrad (108) verbindet;
einen Elektromotor (104);
ein planozentrisches Getriebe (110) mit

einem drehfesten Ringrad (122) mit einer Innenverzahnung, mindestens einem Planetenrad (120) mit einer Außenverzahnung, wobei das Planetenrad (120) mit dem Ringrad (122) in Eingriff steht und in Bezug auf das Ringrad (122) exzentrisch angeordnet ist, mindestens einer von dem Elektromotor (104) angetriebenen Eingangswelle (112), wobei die Eingangswelle (112) einen Planetenträger (116) hat, der derart ausgebildet ist, dass eine Drehung der Eingangswelle (112) eine oszillierende Drehung des Planetenrads (120) bewirkt, und
einem Käfig (124), der mit dem Planetenrad (120) derart in Eingriff steht, dass die oszillierende Drehung des Planetenrades (120) eine Drehung des Käfigs (124) bewirkt;

eine Ausgangswelle (126), die den Käfig (124) mit dem Kettenrad (108) verbindet; und
eine erste Kupplung (202), die die Ausgangswelle (126) mit dem Kettenrad (108) verbindet,
**dadurch gekennzeichnet, dass**
die erste Kupplung (202) eine aktorgesteuerte Kupplung ist, und
dass die Antriebsstranganordnung (200, 300, 400, 500) eine Kupplungssteuereinheit (206) umfasst, die ausgebildet ist, den Aktor der ersten Kupplung (202) so zu steuern, dass er mit der ersten Kupplung in Eingriff und/oder außer Eingriff kommt.

2. Antriebsstranganordnung (200, 300, 400) nach Anspruch 1, umfassend eine zweite Kupplung (204), die die Pedalwelle (106) mit dem Kettenrad (108) verbindet.

3. Antriebsstranganordnung (200, 300, 400) nach Anspruch 2, wobei die zweite Kupplung (204) eine passive einseitig wirkende Kupplung ist.

4. Antriebsstranganordnung (200, 300, 400) nach Anspruch 2, wobei die zweite Kupplung (204) eine aktorgesteuerte Kupplung ist.

5. Antriebsstranganordnung (200, 300, 400, 500) nach Anspruch 4, umfassend einen Drehsensor, der ausgebildet ist, eine Drehgeschwindigkeit und/oder eine Drehrichtung der Pedalwelle (106), der Eingangswelle (112), der Ausgangswelle (126) und/oder des Kettenrades (108) zu bestimmen, wobei die Kupplungssteuereinheit ausgebildet ist, auf der Grundlage der Eingabe aus dem Drehsensor mit der ersten Kupplung (202) und/oder der zweiten Kupplung (204) in Eingriff und/oder außer Eingriff zu kommen.

6. Antriebsstranganordnung (200, 300, 400, 500) nach einem der Ansprüche 1 bis 3, umfassend einen Drehsensor, der ausgebildet ist, eine Drehgeschwindigkeit und/oder eine Drehrichtung der Pedalwelle (106), der Eingangswelle (112), der Ausgangswelle (126) und/oder des Kettenrades (108) zu bestimmen, wobei die Kupplungssteuereinheit ausgebildet ist, auf der Grundlage der Eingabe aus dem Drehsensor mit der ersten Kupplung (202) in Eingriff und/oder außer Eingriff zu kommen.

7. Antriebsstranganordnung (200, 300, 400, 500) nach einem der vorhergehenden Ansprüche, umfassend eine Motorsteuereinheit (130), die ausgebildet ist, den Elektromotor (104) zu steuern.

8. Antriebsstranganordnung (300, 400, 500) nach einem der vorhergehenden Ansprüche, wobei die Pedalwelle (106) mit dem Kettenrad (108) über eine Getriebestufe (302, 402) verbunden ist.

9. Antriebsstranganordnung (200, 300, 400, 500) nach einem der vorhergehenden Ansprüche, wobei das Ringrad (122) und der Käfig (124) koaxial angeordnet sind.

10. Antriebsstranganordnung (200, 300, 400, 500) nach Anspruch 9, wobei die Eingangswelle (112) in Bezug auf das Ringrad (122) und den Käfig (124) koaxial angeordnet ist.

11. Antriebsstranganordnung (200, 300, 400, 500) nach einem der vorhergehenden Ansprüche, umfassend mindestens ein Kurbelgetriebe, das mit der Eingangswelle (112) verbunden ist und eine exzentrische Welle hat, die mit dem Planetenrad (120) verbunden ist.

12. Antriebsstranganordnung (200, 300, 400, 500) nach einem der vorhergehenden Ansprüche, umfassend zwei oder mehr der genannten Ringräder (122) mit der genannten Innenverzahnung, wobei jedes Ringrad (122) mit mindestens einem der genannten Planetenräder (120) in Eingriff steht, das die genannte Außenverzahnung hat und in Bezug auf das Ringrad (122) exzentrisch angeordnet ist.

13. Antriebsstranganordnung (200, 300, 400, 500) nach einem der vorhergehenden Ansprüche, wobei der Antriebsstrang nicht selbsthemmend ist.

14. Antriebsstranganordnung (200, 300, 400, 500) nach einem der vorhergehenden Ansprüche, wobei das Übersetzungsverhältnis des Antriebsstrangs einen Wert gleich 5 oder größer als 5 und kleiner als 1200 oder gleich 1200 hat.

**15.** Fahrrad (700) mit einer Antriebsstranganordnung (200, 300, 400, 500) nach einem der vorhergehenden Ansprüche.

**Revendications**

**1.** Ensemble de train d'entraînement (200, 300, 400, 500) pour une bicyclette (700), comprenant :

> un pignon (108) ;
> un arbre de pédalier (106) reliant les pédales (102) au pignon (108) ;
> un moteur électrique (104) ;
> un train d'engrenages planocentrique (110) présentant

>> une couronne dentée fixe en rotation (122) avec une denture interne,
>> au moins un engrenage planétaire (120) avec une denture externe, l'engrenage planétaire (120) étant mis en prise avec la couronne dentée (122) et agencé de manière excentrique par rapport à la couronne dentée (122),
>> au moins un arbre d'entrée (112) entraîné par le moteur électrique (104), l'arbre d'entrée (112) présentant un porte-satellites (116) étant formé de telle sorte qu'une rotation de l'arbre d'entrée (112) provoque une rotation oscillatoire de l'engrenage planétaire (120), et
>> une cage (124) étant en prise avec l'engrenage planétaire (120) de telle sorte que la rotation oscillatoire de l'engrenage planétaire (120) provoque une rotation de la cage (124) ;

> un arbre de sortie (126) reliant la cage (124) au pignon (108) ; et un premier embrayage (202) reliant l'arbre de sortie (126) au pignon (108),
> **caractérisé en ce que**
> le premier embrayage (202) est un embrayage commandé par actionneur, et
> **en ce que** l'ensemble de train d'entraînement (200, 300, 400, 500) comprend une unité de commande d'embrayage (206) configurée pour commander l'actionneur du premier embrayage (202) afin de mettre en prise et/ou de libérer le premier embrayage (202).

**2.** Ensemble de train d'entraînement (200, 300, 400) selon la revendication 1, comprenant un second embrayage (204) reliant l'arbre de pédalier (106) au pignon (108).

**3.** Ensemble de train d'entraînement (200, 300, 400), selon la revendication 2, dans lequel le second embrayage (204) est un embrayage unidirectionnel passif.

**4.** Ensemble de train d'entraînement (200, 300, 400) selon la revendication 2, dans lequel le second embrayage (204) est un embrayage commandé par actionneur.

**5.** Ensemble de train d'entraînement (200, 300, 400, 500) selon la revendication 4, comprenant un capteur de rotation configuré pour déterminer une vitesse de rotation et/ou une direction de rotation de l'arbre de pédalier (106), de l'arbre d'entrée (112), de l'arbre de sortie (126) et/ou du pignon (108), dans lequel l'unité de commande d'embrayage est configurée pour mettre en prise et/ou libérer le premier embrayage (202) et/ou le second embrayage (204) sur la base de l'entrée provenant du capteur de rotation.

**6.** Ensemble de train d'entraînement (200, 300, 400, 500) selon l'une quelconque des revendications 1 à 3, comprenant un capteur de rotation configuré pour déterminer une vitesse de rotation et/ou une direction de rotation de l'arbre de pédalier (106), de l'arbre d'entrée (112), de l'arbre de sortie (126) et/ou du pignon (108), dans lequel l'unité de commande d'embrayage est configurée pour mettre en prise et/ou libérer le premier embrayage (202) sur la base de l'entrée provenant du capteur de rotation.

**7.** Ensemble de train d'entraînement (200, 300, 400, 500), selon l'une quelconque des revendications précédentes, comprenant une unité de commande de moteur (130) configurée pour commander le moteur électrique (104).

**8.** Ensemble de train d'entraînement (300, 400, 500) selon l'une quelconque des revendications précédentes, dans lequel l'arbre de pédalier (106) est relié au pignon (108) par l'intermédiaire d'un étage d'engrenage (302, 402).

**9.** Ensemble de train d'entraînement (200, 300, 400, 500) selon l'une quelconque des revendications précédentes, dans lequel la couronne dentée (122) et la cage (124) sont agencées de manière coaxiale.

10. Ensemble de train d'entraînement (200, 300, 400, 500) selon la revendication 9, dans lequel l'arbre d'entrée (112) est agencé de manière coaxiale par rapport à la couronne dentée (122) et à la cage (124).

11. Ensemble de train d'entraînement (200, 300, 400, 500) selon l'une quelconque des revendications précédentes, comprenant au moins un engrenage à manivelle, qui est relié à l'arbre d'entrée (112), et présente un arbre excentrique, qui est relié à l'engrenage planétaire (120).

12. Ensemble de train d'entraînement (200, 300, 400, 500) selon l'une quelconque des revendications précédentes, comprenant deux desdites couronnes dentées (122) ou plus présentant ledit engrenage intérieur, dans lequel chaque couronne dentée (122) est en prise avec au moins un engrenage planétaire (120) présentant ledit engrenage extérieur et étant agencée de manière excentrique par rapport à ladite couronne dentée (122).

13. Ensemble de train d'entraînement (200, 300, 400, 500) selon l'une quelconque des revendications précédentes, dans lequel le train d'engrenages n'est pas autobloquant.

14. Ensemble de train d'entraînement (200, 300, 400, 500) selon l'une quelconque des revendications précédentes, dans lequel le rapport de transmission du train d'engrenages présente une valeur égale à 5, ou supérieure à 5 et inférieure à 1 200, ou égale à 1 200.

15. Bicyclette (700) présentant un ensemble de train d'entraînement (200, 300, 400, 500) selon l'une quelconque des revendications précédentes.

Fig. 1

EP 4 039 572 B1

Fig. 2

Fig.3

EP 4 039 572 B1

Fig. 4

Fig. 5

Fig. 6

EP 4 039 572 B1

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10343746 B2
- US 20170259883 A1
- EP 2625441 B1
- DE 202008002610 U1
- EP 2723630 B1
- EP 3163122 A1
- US 2011180341 A1
- KR 20160041733 A
- EP 3406511 A1
- DE 102017219601 A1